# EUROPÄISCHE PATENTANMELDUNG

(11) **EP 1 759 602 A2**
(43) Veröffentlichungstag der Anmeldung: **07.03.2007**
(21) Anmeldenummer: 06016093.4
(22) Anmeldetag: 02.08.2006
(51) Int. Cl.: A24C 5/00, F16J 15/46

(54) **Maschine der Tabak verarbeitenden Industrie**

(30) Priorität: 01.09.2005 DE 102005041767; 15.12.2005 DE 102005060428
(71) Anmelder: Hauni Maschinenbau AG, 21033 Hamburg (DE)
(72) Erfinder: Hartmann, Franz, 21502 Geesthacht (DE); Pawelko, Karl-Heinz, 21436 Marschacht (DE); Siegel, Frank, 21039 Escheburg (DE); Rottmann, Franz, 21509 Glinde (DE); Meyer, Joachim, 21447 Handorf (DE); Hartmann, Stefan, 21391 Reppenstedt (DE); Schlisio, Jörg, 21502 Geesthacht (DE)
(74) Vertreter: Grebner, Christian Georg Rudolf

(57) **Zusammenfassung**

Eine Maschine der Tabak verarbeitenden Industrie (VE,SE,FA) wird dadurch weitergebildet, dass an der Gehäuseunterseite und/oder zwischen der Gehäuseunterseite und der Bodenoberfläche (30) wenigstens eine Saugeinrichtung (20) für auf der Bodenoberfläche (30) liegende Partikel und/oder zwischen der Gehäuseunterseite und der Bodenoberfläche (30) wenigstens eine Abdichteinrichtung (12,16,26,116) vorgesehen sind.

Die Erfindung betrifft weiterhin eine Anordnung einer Abdichteinrichtung (116) einer Maschine der Tabak verarbeitenden Industrie (VE,SE,FA), insbesondere Verteiler (12) und/oder Zigarettenstrangmaschine (SE) und/oder Filteransetzmaschine (FA), zwischen der Gehäuseunterseite der Maschine (VE,SE,FA) und einer Bodenoberfläche (30), auf der die Maschine (VE,SE,FA) angeordnet ist. Die Anordnung wird dadurch weitergebildet, dass die Abdichteinrichtung (116) wenigstens einen, insbesondere beweglichen, Profilschenkel (40,42) und eine Folie (44) aufweist, wobei durch den wenigstens einen Profilschenkel (40,42) und die Folie (44) ein Volumen eingeschlossen wird oder ist, in das zur Ausbildung der Dichtfunktion der Abdichteinrichtung (116) als Arbeitsposition ein, vorzugsweise flüssiges oder gasförmiges, Medium eingebracht wird oder ist.

Ferner betrifft die Erfindung eine Verwendung einer Saugeinrichtung (20) und/oder einer Abdichteinrichtung (12,16,26,116) in einer Maschine der Tabak verarbeitenden Industrie (VE,SE,FA).

## Beschreibung

Die Erfindung betrifft eine Anordnung einer Abdichteinrichtung einer Maschine der Tabak verarbeitenden Industrie, insbesondere Verteiler und/oder Zigarettenstrangmaschine und/oder Filteransetzmaschine, zwischen der Gehäuseunterseite der Maschine und einer Bodenoberfläche, auf der die Maschine angeordnet ist sowie eine Abdichteinrichtung zur Anordnung an einer Maschine der Tabak verarbeitenden Industrie. Die Erfindung betrifft weiterhin eine Maschine der Tabak verarbeitenden Industrie, insbesondere Verteiler und/oder Zigarettenstrangmaschine und/oder Filteransetzmaschine, sowie eine Verwendung einer Abdichteinrichtung und/oder einer Saugeinrichtung.

Zigarettenherstellmaschinen weisen im Allgemeinen folgende Hauptgruppen auf:
- eine Verteilereinheit zum Vereinzeln von Tabakfasern und zum Bilden und Egalisieren eines Tabakstrangs,
- eine Strangeinheit zum Formen eines Zigarettenstrangs aus dem Tabakstrang durch Umhüllen des Tabakstrangs mit einem Umhüllungsstreifen wie Zigarettenpapier, der an einer Kante beleimt ist und anschließend überlappend verklebt wird, wonach er in Einzelstücke (Zigaretten einfacher oder mehrfacher Gebrauchslänge) geschnitten wird,
- sowie eine Filteransetzeinheit zur Herstellung von Filterzigaretten, bei der in der Regel ein Filterstab mehrfacher Gebrauchslänge in Filterstopfen geschnitten wird, die zwischen zwei Zigaretten abgelegt und mittels beleimten Verbindungspapiers mit diesen verbunden werden, wonach die Doppelzigaretten durch mittiges Schneiden durch die angeklebten Filterstopfen in einzelne Filterzigaretten zerschnitten werden.

In Folge der Handhabung großer Tabakmengen je Zeiteinheit in der Verteileinheit und der Bildung und Verarbeitung von Zigaretten entstehen große Mengen von Tabakstaub und kurzen Tabakteilchen, die sich in der Maschine und auf dem Boden lose ablagern und diese allmählich zusetzen. Die erforderliche Reinigung der Maschine ist arbeits- bzw. zeitaufwändig. Der Zwischenraum zwischen der Gehäuseunterseite einer Produktionsmaschine der Tabak verarbeitenden Industrie zwischen der Bodenoberfläche und der Gehäuseunterseite wird im laufenden Produktionsbetrieb somit stark verschmutzt. Der Schmutz wird in erster Linie von den offenen Seiten im Bodenbereich unter die Maschine gebracht.

Außerdem entstehen bei den geschilderten Schneidvorgängen und zusätzlich bei Beleimungsschritten (Beleimung einer Kante des Zigarettenpapiers; Beleimung eines Papierstreifens, von dem Verbindungsblättchen abgeschnitten werden) Ablagerungen. Deshalb sind regelmäßige Reinigungsmaßnahmen an der Maschine erforderlich.

Aus DE 103 17 770 A1 sind ein Verfahren und eine Anordnung zum Reinigen einer Zigarettenherstellmaschine bekannt.

Ausgehend von diesem Stand der Technik ist es eine Aufgabe der vorliegenden Erfindung, die Reinigung einer Maschine der Tabak verarbeitenden Industrie zu erleichtern. Eine weitere Aufgabe der vorliegenden Erfindung besteht darin, eine Abdichteinrichtung einer Maschine der Tabak verarbeitenden Industrie derart weiter zu bilden, so dass es möglich ist, den Zwischenraum zwischen der Gehäuseunterseite und der Bodenoberfläche der Maschine für eine vorbestimmte Zeitdauer von der äußeren Umgebung abzuschotten, wobei es gleichzeitig möglich sein soll, die Höhe zwischen der Gehäuseunterseite und der Bodenoberfläche zu überbrücken und abzudichten und die Abdichteinrichtung im deaktivierten Zustand kompakt auszubilden.

Gelöst wird diese Aufgabe bei einer Maschine der Tabak verarbeitenden Industrie, insbesondere Verteiler und/oder Zigarettenstrangmaschine und/oder Filteransetzmaschine dadurch, dass an der Gehäuseunterseite und/oder zwischen der Gehäuseunterseite und der Bodenoberfläche wenigstens eine Saugeinrichtung für auf der Bodenoberfläche liegende Partikel und/oder zwischen der Gehäuseunterseite und der Bodenoberfläche wenigstens eine Abdichteinrichtung vorgesehen sind. Durch die an der Gehäuseunterseite vorgesehene bzw. angeordnete Saugeinrichtung wird eine Partikelentfernungseinrichtung zur Entfernung von Partikeln auf der Bodenoberfläche ausgebildet. Das Gehäuse einer Maschine der Tabak verarbeitenden Industrie ist in einem vorbestimmten Abstand zu einer Bodenfläche angeordnet, wodurch ein Zwischenraum zwischen der Bodenoberfläche und der Gehäuseunterseite ausgebildet wird. Während der Produktion fallen Partikel oder Tabakteilchen auf den Boden und bleiben auf dem Boden im Zwischenraum liegen, so dass dieser Zwischenraum verschmutzt. Der Schmutz wird nunmehr auf automatische Weise durch Ansaugen bzw. Absaugen entfernt.

Durch die erfindungsgemäße Saugeinrichtung wird eine einfache Reinigung des Zwischenraums zwischen der Gehäuseunterseite und der Bodenoberfläche möglich, wobei der Schmutz unterhalb der Maschinen vollständig aus dem Maschinenbereich gebracht wird. Hierdurch werden die Schmutzpartikel gesammelt.

Darüber hinaus bewirkt die vorgesehene Abdichteinrichtung zwischen der Gehäuseunterseite und der Bodenoberfläche eine Art Schott oder Sperre, so dass keine Schmutzpartikel von außerhalb in den Zwischenraum zwischen der Gehäuseunterseite und der Bodenoberfläche gelangen. Dadurch wird der Zwischenraum unterhalb der Gehäuseunterseite von der Umgebung abgetrennt.

Ferner wird durch die Kombination der Abdichteinrichtung, die beispielsweise am Rand der Gehäuseunterseite an den Längsseiten der Maschine angeordnet ist und somit eine Art Kanal bildet, mit der Saugeinrichtung, mittels der die Partikel auf der Bodenoberfläche im Zwischenraum zwischen der Gehäuseunterseite und der Bodenoberfläche abgesaugt werden, erreicht, dass ausschließlich nur der Zwischenraum von den Partikeln auf einfache Weise befreit wird.

Außerdem ist es vorteilhaft, wenn die Abdichteinrichtung unter Formschluss zwischen der Gehäuseunterseite und der Bodenfläche angeordnet ist. Hierdurch wird eine Trenneinrichtung geschaffen, wodurch außerhalb der Maschine befindlicher Schmutz nicht unter die Gehäuseunterseite gelangt und maschineneigener Schmutz oder Tabakteilchen im Zwischenraum zwischen der Gehäuseunterseite und der Bodenoberfläche nicht nach außen dringt.

Um beispielsweise einen durch Trennwände an den Längsseiten der Maschine gebildeten Kanal stirnseitig zu schließen oder zu öffnen ist es von Vorteil, wenn die Abdichteinrichtung wenigstens teilweise beweglich und/oder elastisch ausgebildet ist. Dies lässt sich dadurch erreichen, wenn die Abdichteinrichtung in Form einer aufblasbaren Dichtlippe oder eines aufblasbaren Dichtschlauches ausgebildet ist.

Dazu ist es vorteilhaft, wenn die Abdichteinrichtung wenigstens teilweise in permanentem Kontakt mit der Bodenoberfläche steht, wodurch ein Formschluss zwischen der Gehäuseunterseite und der Bodenoberfläche beispielsweise an den Längsseiten ausgebildet ist.

Der Zwischenraum zwischen der Gehäuseunterseite und der Bodenoberfläche kann außerdem an einer Stelle geöffnet und geschlossen werden, so dass es vorteilhaft ist, wenn die die Abdichteinrichtung wenigstens teilweise in temporärem Kontakt mit der Bodenoberfläche für eine vorbestimmte Zeitdauer steht.

Dazu ist vorgesehen, dass die Abdichteinrichtung mittels einer mit einem, insbesondere gasförmigen oder flüssigen, Medium befüllbaren Dichtlippe oder mittels eines befüllbaren Dichtschlauchs ausgebildet ist.

Überdies ist es günstig, wenn die Gehäuseunterseite durch die Abdichteinrichtung wenigstens teilweise umrandet ist. Gemäß einer bevorzugten Weiterbildung ist an der Gehäuseunterseite wenigstens eine Führungswandung vorgesehen, um bei eingeschalteter Saugeinrichtung die Partikel gezielt zur Saugöffnung zu leiten. Hierdurch wird eine effektive Entfernung der Partikel aus dem Zwischenraum erreicht.

Insbesondere sind im Zusammenwirken von eingeschalteter Saugeinrichtung und Abdichteinrichtung die Partikel auf der Bodenoberfläche entfernbar.

Darüber hinaus wird die Aufgabe gelöst durch eine Verwendung einer Saugeinrichtung und/oder einer Abdichteinrichtung in einer Maschine der Tabak verarbeitenden Industrie, wie sie voranstehend beschrieben sind. Durch Verwendung der Saugeinrichtung bzw. der Abdichteinrichtung einzeln oder in Kombination miteinander wird beispielsweise erreicht, dass der Staub bzw. die Tabakteilchen aus dem Zwischenraum durch Erzeugung einer Luftströmung durch Ansaugen im Zwischenraum entfernt werden. Vorteilhafte Ausgestaltungen der Saugeinrichtung und/oder der Abdichteinrichtung sind in den obigen Ausführungen beschrieben, auf die ausdrücklich verwiesen wird.

Die Aufgabe wird ferner gelöst durch eine Anordnung einer Abdichteinrichtung einer Maschine der Tabak verarbeitenden Industrie, insbesondere Verteiler- und/oder Zigarettenstrangmaschine und/oder Filteransetzmaschine, zwischen der Gehäuseunterseite in den Randbereichen der Maschine und einer Bodenoberfläche, auf der die Maschine angeordnet ist, die dadurch weitergebildet wird, dass die Abdichteinrichtung wenigstens einen, insbesondere beweglichen, Profilschenkel und eine Folie aufweist, wobei durch den wenigstens einen Profilschenkel und die Folie ein Volumen eingeschlossen wird oder ist, in das zur Ausbildung der Dichtfunktion der Abdichteinrichtung als Arbeitsposition ein, vorzugsweise flüssiges oder gasförmiges, Medium eingebracht wird oder ist.

Das Gehäuse einer Maschine der Tabak verarbeitenden Industrie ist in einem vorbestimmten Abstand zu bzw. über einer Bodenfläche auf Füßen oder dergleichen angeordnet, wodurch ein offener Zwischenraum zwischen der Bodenoberfläche und der Gehäuseunterseite ausgebildet wird. Typischerweise beträgt dieser Abstand der Bodenfreiheit der Maschine bzw. Gehäuseunterseite zum Boden zwischen 70 mm bis 110 mm, vorzugsweise 90 mm. Während der Produktion fallen Partikel oder Tabakteilchen auf den Boden und bleiben auf dem Boden im Zwischenraum unterhalb der Maschine liegen, so dass dieser Zwischenraum verschmutzt. Dieser Schmutz kann auf automatische Weise durch Ansaugen bzw. Absaugen entfernt werden, insbesondere wenn an der Gehäuseunterseite eine Saugeinrichtung an der Maschine vorgesehen ist. Hierzu bewirkt die vorgesehene Abdichteinrichtung zwischen der Gehäuseunterseite und der Bodenoberfläche eine Art Schott oder Sperre, so dass keine Schmutzpartikel von außerhalb in den Zwischenraum zwischen der Gehäuseunterseite und der Bodenoberfläche gelangen. Dadurch wird der Zwischenraum unterhalb der Gehäuseunterseite von der Umgebung abgetrennt.

Mittels der Abdichteinrichtung in der Arbeitsposition wird der Zwischenraum zwischen der Gehäuseunterseite und der Bodenoberfläche überbrückt und unterteilt. Hierzu verfügt die Abdichteinrichtung über eine Kammer, deren Volumen durch Einbringen oder Austragen eines Mediums in die bzw. aus der Kammer vergrößerbar bzw. verkleinerbar ist.

Durch die Abschottung des Raumes unterhalb der Produktionsmaschine der Tabak verarbeitenden Industrie wird durch die Abdichteinrichtung in Arbeitsposition, d.h. bei befülltem Kammervolumen, das von dem wenigstens einen Profilschenkel und der Folie eingeschlossen ist, der Zwischenraum so abgedichtet, dass keine Schmutzpartikel oder Tabakteilchen in den Zwischenraum gelangen können. Durch eine an der Gehäuseunterseite vorgesehene Saugeinrichtung kann anschließend nach Ausbildung der Dichtfunktion der Abdichteinrichtung der Schmutz unterhalb der Gehäuseunterseite entfernt werden bzw. gezielt abgesaugt werden.

Wenn die Abdichteinrichtung unter Formschluss in Arbeitsposition zwischen der Gehäuseunterseite und der Bodenfläche mit vollem Volumen ausgebildet ist, wird hierdurch eine Trenneinrichtung geschaffen, so dass außerhalb der Maschine befindlicher Schmutz nicht unter die Gehäuseunterseite gelangt und maschineneigener Schmutz oder Tabakteilchen im Zwischenraum zwischen der Gehäuseunterseite und der Bodenoberfläche nicht nach außen dringen. Hierzu steht die Dichteinrichtung wenigstens teilweise in permanentem Kontakt mit der Bodenoberfläche, so dass eine Verbindung zwischen der Gehäuseunterseite und der Bodenoberfläche beispielsweise an der Längsseite der Maschine ausgebildet ist.

Durch die Abdichteinrichtung ist es ebenso möglich, den Zwischenraum zwischen der Gehäuseunterseite und der Bodenoberfläche an einer vorbestimmten Stelle zu öffnen oder zu schließen, so dass die Abdichteinrichtung wenigstens teilweise in temporären Kontakt mit der Bodenoberfläche für eine vorbestimmte Zeitdauer steht.

Um das eingeschlossene Volumen mit einem Medium zu befüllen oder zu entleeren, ist wenigstens ein entsprechender Einlass bzw. Auslass vorgesehen. Zum Einbringen von beispielsweise Druckluft als Medium ist eine Druckluftquelle an einem Einlass angeschlossen.

Überdies wird durch den wenigstens einen beweglichen Profilschenkel erreicht, dass bei inaktiver Abdichteinrichtung, d.h. kein Kontakt der Abdichteinrichtung zum Boden oder zur Gehäuseunterseite und damit offenen Seite, der Profilschenkel umgeklappt wird oder ist, wodurch die Bodenfreiheit unter der Maschine im Zwischenraum im Wesentlichen erhalten bleibt. Mittels der erfindungsgemäßen Abdichteinrichtung mit wenigstens einem beweglichen Profilschenkel kann ein Dichtungsprofil an der Maschinenunterseite verwirklicht werden, das einen großen Ausfahrweg über die zu überbrückende Höhe bzw. abzudichtende Bodenfreiheit und eine geringe Resthöhe bzw. Einfahrhöhe bei deaktivierter Abdichteinrichtung ermöglicht.

Dazu ist vorgesehen, dass die Abdichteinrichtung durch Entnahme bzw. Ablassen des Mediums aus dem Volumen von der Arbeitsposition in eine Ruheposition gebracht wird oder bringbar ist. Hierzu wird beispielsweise Druckluft aus dem eingeschlossenen Arbeitsvolumen der Abdichteinrichtung, das in seiner Größe veränderbar ist, abgelassen.

Eine geringe Höhe der Abdichteinrichtung in Ruheposition wird dadurch erreicht, dass in der Ruheposition das Volumen die geringste Größe hat, so dass eine kompakte Bauweise oder Aufbau der Abdichteinrichtung möglich ist. Insbesondere sind die Übergänge von der Ruheposition in die Arbeitsposition und von der Arbeitsposition in die Ruheposition reversibel, wodurch ein gezieltes Schalten der Abdichteinrichtung erreicht wird.

Eine gute Abtrennung des Zwischenraums unterhalb der Gehäuseunterseite von der Umgebung ist insbesondere dann realisiert, wenn in der Arbeitsposition der Abdichteinrichtung das Volumen der Abdichteinrichtung ein Maximum erreicht.

In einer bevorzugten Weiterbildung weist die Abdichteinrichtung zwei, insbesondere bewegliche, Profilschenkel auf, zwischen denen die Folie angeordnet ist.

Darüber hinaus wird ein einfacher Aufbau dadurch erzielt, dass der wenigstens eine oder beide Profilschenkel auf einer Trägerplatte angeordnet sind. Ferner ist die Trägerplatte an der Gehäuseunterseite angeordnet und/oder in die Gehäuseunterseite der Maschine integriert.

Das reversible Verhalten der Abdichteinrichtung wird dadurch unterstützt, dass der wenigstens eine oder beide Profilschenkel aufgrund von jeweils eigenen Rückstellkräften und/oder in Folge von äußeren Kräften auf die Profilschenkel in die Ruheposition gebracht werden.

Ferner ist es von Vorteil, wenn die beiden Profilschenkel bei Übergang in die Ruheposition und/oder aus der Ruheposition, insbesondere zeitlich, nacheinander bewegt werden, wodurch ein geordnetes und reversibles Ein- und Ausfahren der beiden Profilschenkel ausgeführt wird.

Wenn die beiden Profilschenkel im Ruhezustand benachbart zueinander angeordnet sind, ist eine kompakte inaktive Abdichteinrichtung realisiert, wodurch die Bodenfreiheit zwischen der Bodenoberfläche und der Gehäuseunterseite im Wesentlichen erhalten bleibt.

Vorteilhaft ist es überdies, wenn der wenigstens eine oder beide Profilschenkel extrudierte Profile sind, die sich dadurch auszeichnen, dass sie einfach als Endlosprofile hergestellt werden können.

Außerdem ist es bevorzugt, wenn die Folie elastisch ist, so dass das variable Volumen der Abdichteinrichtung vergrößert bzw. entsprechend verkleinert werden kann.

Darüber hinaus wird ein geordnetes Ein- bzw. Ausfahren der Profilschenkel dadurch möglich, dass die beiden Profilschenkel asymmetrisch zueinander angeordnet sind.

Gemäß einer weiteren bevorzugten Weiterbildung sind der wenigstens eine Profilschenkel oder beide Profilschenkel steifer, d.h. weniger elastisch als die Folie ausgebildet.

Eine weitere Lösung der Aufgabe besteht darin, dass eine Abdichteinrichtung zur Anordnung an einer Maschine der Tabak verarbeitenden Industrie, insbesondere Verteiler und/oder Zigarettenstrangmaschine und/oder Filteransetzmaschine, zwischen der Gehäuseunterseite der Maschine und einer Bodenoberfläche, auf der die Maschine angeordnet ist, dadurch weitergebildet wird, dass die Abdichteinrichtung wenigstens einen, insbesondere beweglichen, Profilschenkel und eine Folie aufweist, wobei durch den wenigstens einen Profilschenkel und die Folie ein Volumen eingeschlossen wird oder ist, in das zur Ausbildung der Dichtfunktion der Abdichteinrichtung als Arbeitsposition ein, vorzugsweise flüssiges oder gasförmiges, Medium eingebracht wird oder ist. Vorteilhafte Weiterbildungen der Abdichteinrichtung für eine oder in Kombination mit einer Maschine der Tabak verarbeitenden Industrie bzw. einer Abdichteinrichtung einer derartigen Maschine ergeben sich aus den voranstehenden Ausführungen, auf die ausdrücklich zur Vermeidung von Wiederholungen verwiesen wird.

Darüber hinaus wird die Erfindung gelöst durch eine Maschine der Tabak verarbeitenden Industrie, insbesondere Verteiler und/oder Zigarettenstrangmaschine und/oder Filteransetzmaschine, die mit einer erfindungsgemäßen Anordnung oder einer Abdichteinrichtung ausgebildet ist. Vorteilhafte Ausgestaltungen der Abdichteinrichtung sind in den obigen Ausführungen beschrieben, auf die ausdrücklich verwiesen wird.

Im Rahmen der Erfindung ist es weiterhin denkbar, dass die beschriebene Abdichteinrichtung auch an anderen Maschinen mit einer vorbestimmten Bodenfreiheit vorgesehen sein kann, um eine Abschottung der Zwischenräume unterhalb der Unterseite zu bewirken.

Die Erfindung wird nachstehend ohne Beschränkung des allgemeinen Erfindungsgedankens anhand von Ausführungsbeispielen unter Bezugnahme auf die beigefügten schematischen Zeichnungen exemplarisch beschrieben, auf die im Übrigen bezüglich der Offenbarung aller im Text nicht näher erläuterten erfindungsgemäßen Einzelheiten ausdrücklich verwiesen wird. Es zeigen:
- Fig. 1: eine Draufsicht auf eine Anordnung von mehreren Maschinen der Tabak verarbeitenden Industrie und
- Fig. 2a, 2b: jeweils einen Querschnitt durch eine erfindungsgemäße Abdichteinrichtung gemäß der Schnittlinie II-II in Fig. 1 in Ruheposition (Fig. 2a) und in Arbeitsposition (Fig. 2b)
- Fig. 3: im Ausschnitt einen Querschnitt durch eine Filteransetzmaschine gemäß der Schnittlinie III-III in Fig. 1.

In den nachfolgenden Figuren sind jeweils gleiche oder gleichartige Elemente bzw. entsprechende Teile mit denselben Bezugsziffern versehen, so dass von einer entsprechenden erneuten Vorstellung jeweils abgesehen wird.

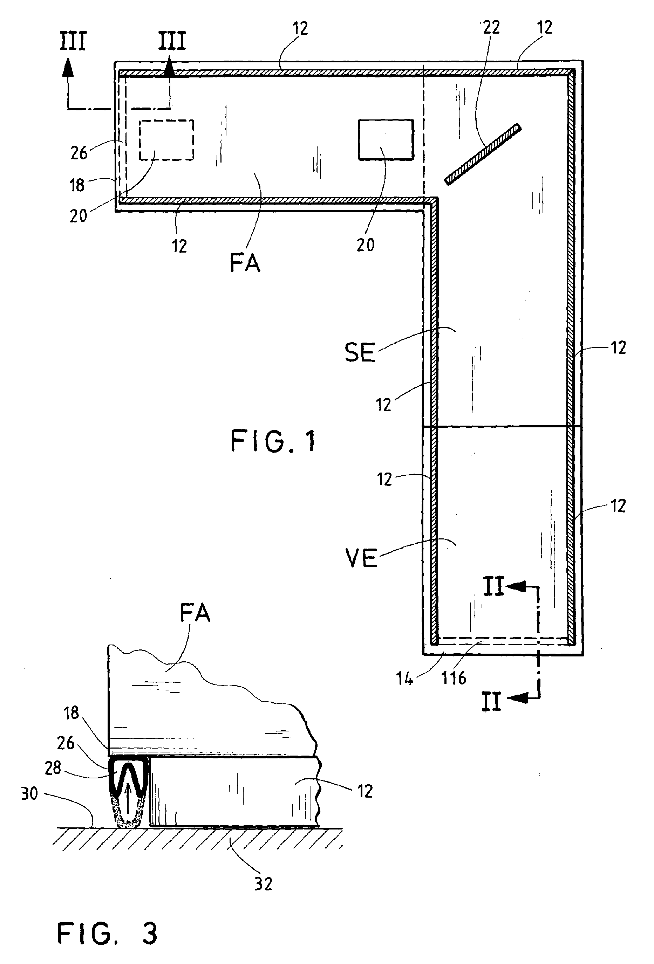

Fig. 1 zeigt eine Draufsicht auf eine Kombination von mehreren Maschinen der Tabak verarbeitenden Industrie, bestehend aus einer Verteilereinheit VE, einer Strangeinheit SE und einer Filteransetzeinheit FA.

Die Verteilereinheit VE empfängt von einer externen Beschickungsanlage Schnitttabak, der zu einem oder mehreren Tabaksträngen verarbeitet und der Strangeinheit SE übergeben wird. Die Strangeinheit SE umhüllt die Tabakstränge mit Papier und schneidet sie in doppeltlange Tabakstöcke. Die Filteransetzeinheit FA setzt Filterstopfen an die von der Strangeinheit übergebenen Tabakstöcke, so dass am Ende des Herstellungsprozesses Filterzigaretten einfacher oder mehrfacher Gebrauchslänge entstehen. Die Funktion der Verteilereinheit VE sowie der Strangeinheit SE und der Filteransetzeinheit FA sind in DE 103 17 770 A1 ausführlich beschrieben, so dass die Offenbarung dieses Dokuments in die Offenbarung der vorliegenden Patentanmeldung ausdrücklich aufgenommen wird. Zu Einzelheiten im Hinblick auf die verschiedenen Maschinenbauteile wird auf dieses Dokument ausdrücklich verwiesen.

An den Längsseiten der Verteilereinheit VE, der Strangeinheit SE und der Filteransetzeinheit FA sind jeweils zwischen der Gehäuseunterseite und der Bodenoberfläche, auf der die Maschinen angeordnet sind, Dichtungen 12 angeordnet, um den Zwischenraum zwischen der Gehäuseunterseite und der Bodenoberfläche seitlich zu begrenzen. Hierbei sind die Dichtungen 12 formschlüssig zwischen der Bodenoberfläche und der Gehäuseunterseite angeordnet (vgl. Fig. 3). Die Dichtungen 12 sind daher in permanentem Kontakt mit der Bodenoberfläche. Dadurch, dass die Dichtungen 12 dauerhaft den Zwischenraum unter der Gehäuseoberfläche von dem Raum außerhalb der Maschine trennen, gelangt kein Schmutz von außerhalb der Maschine in den Zwischenraum.

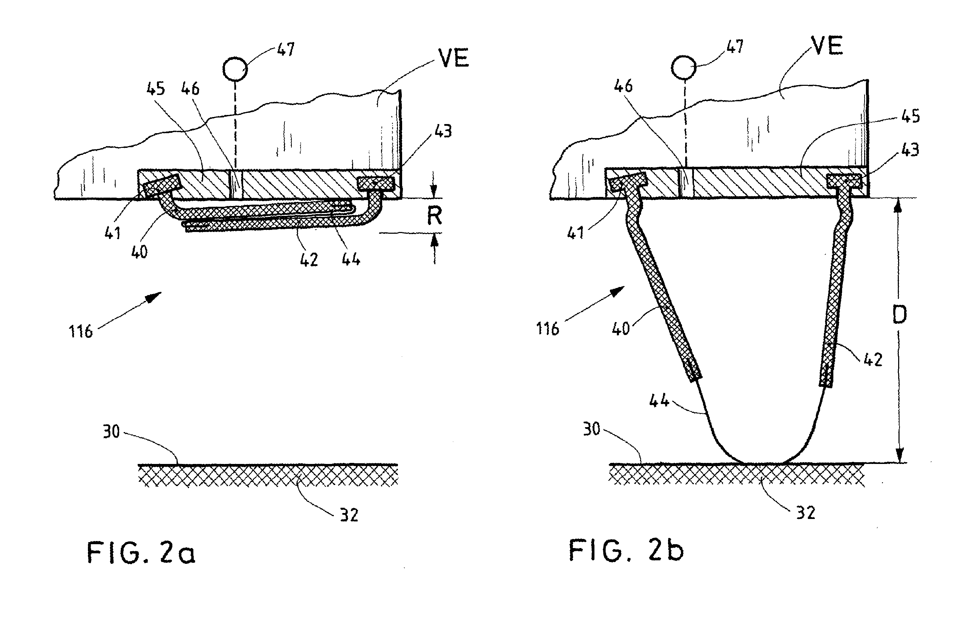

An der Stirnseite 14 der Verteilereinheit VE ist eine bewegliche Dichtlippe 16 an der Gehäuseunterseite angeordnet, so dass durch ein entsprechendes Schalten der Dichtlippe 16 bzw. Beaufschlagen mit Druckluft der Zwischenraum unter der Gehäuseoberfläche an der Stirnseite 14 zusammen mit den seitlich angeordneten Dichtungen 12 abgedichtet ist. Nach einer vorbestimmten Zeitdauer wird die Dichtlippe 16 zurückgefahren, so dass der Zwischenraum an der Stirnseite 14 der Verteilereinheit VE geöffnet ist. Die Dichtlippe 16 in Fig. 1 kann in einer Ausgestaltung als Abdichteinrichtung 116 ausgebildet sein, wie sie in den Fig. 2a und 2b im Detail dargestellt ist.

Auch an der Stirnseite 18 der Filteransetzeinheit FA ist eine schaltbare Dichtlippe 26 an der Unterseite des Gehäuses der Filteransetzeinheit FA angeordnet (vgl. Fig. 3).

Ferner verfügt die Filteransetzeinheit FA über eine Saugeinrichtung 20, deren Saugfläche nach unten zum Zwischenraum zwischen der Gehäuseunterseite und der Bodenfläche gerichtet ist. Darüber hinaus verfügt die Filteransetzeinheit FA in einer Weiterbildung über eine optionale Saugeinrichtung 20, die im Bereich der Stirnseite 18 gestrichelt eingezeichnet ist. Um bei einer eingeschalteten Saugeinrichtung 20 den Staub auf der Bodenoberfläche gezielt zu der Saugeinrichtung 20 zu leiten, ist auf der Unterseite der Strangeinheit SE im Übergabebereich der geschnittenen Tabakstöcke zur Filteransetzeinheit FA ein Leitblech 22 angeordnet. Sowohl die Position der Saugeinrichtung(en) 20 als auch die Position eines oder mehrerer Leitbleche sind an der Unterseite der Maschinen FE, SE und FA entsprechend den gewünschten Anforderungen zur Entfernung der Partikel wählbar.

Um eine effektive Reinigung des Zwischenraums bzw. der Bodenoberfläche unter der Gehäuseunterseite zu erreichen, ist beispielsweise die Dichtlippe 26 in geschlossenem Kontakt mit der Bodenoberfläche, während die Dichtlippe 16 geöffnet ist. Durch die Saugkraft der Saugeinrichtung 20 an der Filteransetzeinheit FA wird ein Luftstrom von der Stirnseite 14 der Verteilereinheit VE zur Saugeinrichtung 20 ausgebildet, wodurch die Staubpartikel bzw. Tabakteilchen unter der Verteilereinheit VE und der Strangeinheit SE abgesaugt werden. Anschließend wird die Dichtlippe 16 geschlossen und die Dichtlippe 26 an der Stirnseite 18 der Filteransetzeinheit FA geöffnet, wodurch nach Einschalten der Saugeinrichtung 20 der Filteransetzeinheit FA ein Luftstrom von der Stirnseite 18 der Filteransetzeinheit FA zur Saugeinrichtung 20 ausgebildet ist. Hierdurch werden ebenfalls die Tabakteilchen unterhalb der Filteransetzeinheit zur Saugeinrichtung 20 geführt und entfernt. Die Luftströmung der durch die Saugeinrichtung 20 erzeugten Luft ist so eingestellt, dass auf der Bodenoberfläche liegende Staubpartikel oder Tabakteilchen oder dergleichen aus dem Zwischenraum zwischen der Gehäuseunterseite und der Bodenoberfläche entfernt werden.

Die Figuren 2a und 2b zeigen jeweils eine Querschnittsdarstellung der erfindungsgemäßen Abdichteinrichtung 116 gemäß der in Fig. 1 eingezeichneten Schnittlinie II-II in einer Ruheposition (Fig. 2a) und in einer Arbeitsposition (Fig. 2b). Ferner ist es im Rahmen der Erfindung vorstellbar, dass die in Fig. 1 gezeigte seitliche Dichtung 12 ebenfalls wie die nachfolgend beschriebene Abdichteinrichtung 116 ausgebildet ist.

Die Abdichteinrichtung 116 ist an der Gehäuseunterseite der Verteilereinheit VE angeordnet bzw. in die Gehäuseunterseite integriert. Die Abdichteinrichtung 116 verfügt über bewegliche Profilarme 40, 42, zwischen denen eine elastische Folie 44 befestigt ist. Die Profilarme 40, 42 sind als extrudierte Profile mit ihren Basisköpfen 41, 43 in einer Trägerplatte 45 an der Gehäuseunterseite befestigt. Ferner verfügt die Trägerplatte 45 über eine Durchbrechung 46 bzw. Öffnung, an die eine schematisch eingezeichnete Druckluftquelle 47 angeschlossen ist.

Fig. 2a zeigt die Abdichteinrichtung 116 im entspannten Zustand, d.h. in ihrer Ruheposition, wobei die Profilarme 40, 42 übereinander liegend zusammengeklappt sind, so dass die Folie 44 S-förmig oder schlangenförmig zwischen den Enden der Profilarme 40, 42 geführt bzw. eingeschlagen ist. In der Ruheposition nimmt das eingeschlossene Volumen die geringste Größe ein.

Um die Dichtfunktion der Abdichteinrichtung 116 zu aktivieren, wird in das von den beiden Profilarmen 40, 42 und der Folie 44 eingeschlossene Volumen unterhalb der Trägerplatte 45 mit Druckluft aus der Druckluftquelle 47 beaufschlagt, so dass durch Einbringen von Druckluft die Profilarme 40, 42 nach unten bewegt bzw. gedrückt werden, wodurch die freien Enden der Profilarme 40, 42 aufklappen. Es wird so lange Druckluft in das von der Trägerplatte 45 und den Profilarmen 40, 42 sowie der Folie 44 eingeschlossene Volumen eingebracht, bis die Folie 44 die Bodenoberfläche 30 des Bodens 32 berührt und gegen die Bodenoberfläche 30 drückt, so dass durch den entfalteten Zustand der Abdichteinrichtung 116 (vgl. Fig. 2b) eine Dichtfunktion bzw. Trennfunktion der Dichteinrichtung 116 zwischen dem Raum unterhalb der Maschinenunterseite und der äußeren Umgebung erreicht wird (Arbeitsposition). Hierbei hat das eingeschlossene Volumen seine maximale Größe erreicht.

Wie aus Fig. 2b zu entnehmen ist, bilden der Profilarm 40, die Folie 44 und der Profilarm 42 in ihrer Arbeitsposition zum Abdichten des Zwischenraums zwischen der Bodenoberfläche und der Maschinenunterseite eine U-Form bzw. V-Form aus.

Ferner ist in Fig. 2b zu erkennen, dass die Profilarme 40, 42 asymmetrisch zueinander angeordnet sind, so dass aufgrund der eigenen Rückstellkräfte der Profilarme 40, 42 der schräg angestellte Profilarm 40 bei Ablassen der Druckluft aus dem Innenraum der Abdichteinrichtung 116 vor dem anderen Profilarm 42 zurückklappt. Durch das schräge Anstellen bzw. Verkippen des Profilarms 40 wird eine höhere Vorspannung im Profilarm 40 ausgebildet.

Durch die erfindungsgemäße Abdichteinrichtung 116 wird durch das Einklappen der Profilarme 40, 42 im entspannten Zustand bzw. in der Ruheposition eine Abdichteinrichtung ausgebildet, die eine geringe Einfahrhöhe bzw. Resthöhe R (Fig. 2a) aufweist. Im entfalteten bzw. ausgefahrenen Zustand der Abdichteinrichtung 116 wird erreicht, einen großen Abstand (Bodenfreiheit) zwischen der Bodenoberfläche 30 und der Gehäuseunterseite seitlich an der Maschine abzudichten, wobei die Übergange zwischen der Ruheposition und der Arbeitsposition reversibel sind. Hierzu wird der Abstand D zwischen der Gehäuseunterseite und der Bodenoberfläche 30 dichtend überbrückt.

Fig. 3 zeigt eine Querschnittsdarstellung der in Fig. 1 eingezeichneten Schnittlinie III-III. An der Stirnseite 18 der Filteransetzeinheit FA ist die schaltbare Dichtlippe 26 auf der Gehäuseunterseite angeordnet. Die Dichtlippe 26 verfügt über einen Hohlraum 28, der durch Einfüllen eines Gases oder eines flüssigen Mediums sich ausdehnt und in eine gestrichelt eingezeichnete Position bewegt wird, in der die Dichtlippe 26 die Bodenfläche 30 des Bodens 32 berührt. Hierdurch wird der Zwischenraum unter der Gehäuseunterseite der Filteransetzeinheit zusammen mit den Dichtungen 12 an den Längsseiten der Filteransetzeinheit geschlossen. Durch Ablassen des Gases oder des flüssigen Mediums nimmt die Dichtlippe 26 aufgrund der Rückstellkräfte der Lippe ihre geöffnete Stellung wieder ein.

### Bezugszeichenliste

- 12: Dichtung
- 14: Stirnseite
- 16: Dichtlippe
- 18: Stirnseite (Filteransetzeinheit FA)
- 20: Saugeinrichtung
- 22: Leitblech
- 26: Abdichteinrichtung
- 28: Hohlraum
- 30: Bodenoberfläche
- 32: Boden
- 40: Profilarm
- 41: Basiskopf
- 42: Profilarm
- 43: Basiskopf
- 44: Folie
- 45: Trägerplatte
- 46: Durchbrechung
- 47: Druckluftquelle
- 116: Abdichteinrichtung
- D: Abstand
- FA: Filteransetzeinheit
- SE: Strangeinheit
- R: Resthöhe
- VE: Verteilereinheit

## Patentansprüche

1. Maschine der Tabak verarbeitenden Industrie (VE, SE, FA), insbesondere Verteiler (VE) und/oder Zigarettenstrangmaschine (SE) und/oder Filteransetzmaschine (FA), **dadurch gekennzeichnet, dass** an der Gehäuseunterseite und/oder zwischen der Gehäuseunterseite und der Bodenoberfläche (30) wenigstens eine Saugeinrichtung (20) für auf der Bodenoberfläche (30) liegende Partikel und/oder zwischen der Gehäuseunterseite und der Bodenoberfläche (30) wenigstens eine Abdichteinrichtung (12, 16, 26, 116) vorgesehen sind.

2. Maschine (VE, SE, FA) nach Anspruch 1, **dadurch gekennzeichnet, dass** die Abdichteinrichtung (12, 16, 26, 116) unter Formschluss zwischen der Gehäuseunterseite und der Bodenoberfläche (30) angeordnet ist.

3. Maschine (VE, SE, FA) nach Anspruch 1 oder 2, **dadurch gekennzeichnet, dass** die Abdichteinrichtung (12, 16, 26, 116) wenigstens teilweise beweglich und/oder elastisch ausgebildet ist.

4. Maschine (VE, SE, FA) nach einem der Ansprüche 1 bis 3, **dadurch gekennzeichnet, dass** die Abdichteinrichtung (12, 16, 26, 116) wenigstens teilweise in permanentem Kontakt mit der Bodenoberfläche (30) steht.

5. Maschine (VE, SE, FA) nach einem der Ansprüche 1 bis 4, **dadurch gekennzeichnet, dass** die Abdichteinrichtung (12, 16, 26, 116) wenigstens teilweise in temporärem Kontakt mit der Bodenoberfläche (30) für eine vorbestimmte Zeitdauer steht.

6. Maschine (VE, SE, FA) nach einem der Ansprüche 1 bis 5, **dadurch gekennzeichnet, dass** die Abdichteinrichtung (12, 16, 26, 116) mittels einer mit einem, insbesondere gasförmigen oder flüssigen, Medium befüllbaren Dichtlippe (12, 16) oder mittels eines mit einem Medium befüllbaren Dichtschlauch ausgebildet ist.

7. Maschine (VE, SE, FA) nach einem der Ansprüche 1 bis 6, **dadurch gekennzeichnet, dass** die Gehäuseunterseite durch die Abdichteinrichtung (12, 16, 26, 116) wenigstens teilweise umrandet ist.

8. Maschine (VE, SE, FA) nach einem der Ansprüche 1 bis 7, **dadurch gekennzeichnet, dass** an der Gehäuseunterseite wenigstens eine Führungswandung (22) vorgesehen ist.

9. Maschine (VE, SE, FA) nach einem der Ansprüche 1 bis 8, **dadurch gekennzeichnet, dass** im Zusammenwirken von Saugeinrichtung (20) und Abdichteinrichtung (12, 16, 26, 116) die Partikel auf der Bodenoberfläche (30) entfernbar sind.

10. Verwendung einer Saugeinrichtung (20) und/oder einer Abdichteinrichtung (12, 16, 26, 116) in einer Maschine der Tabak verarbeitenden Industrie (VE, SE, FA) nach einem der Ansprüche 1 bis 9.

11. Anordnung einer Abdichteinrichtung (116) einer Maschine der Tabak verarbeitenden Industrie (VE, SE, FA), insbesondere Verteiler (VE) und/oder Zigarettenstrangmaschine (SE) und/oder Filteransetzmaschine (FA), zwischen der Gehäuseunterseite der Maschine (VE, SE, FA) und einer Bodenoberfläche (30), auf der die Maschine (VE, SE, FA) angeordnet ist, **dadurch gekennzeichnet, dass** die Abdichteinrichtung (116) wenigstens einen, insbesondere beweglichen, Profilschenkel (40, 42) und eine Folie (44) aufweist, wobei durch den wenigstens einen Profilschenkel (40, 42) und die Folie (44) ein Volumen eingeschlossen wird oder ist, in das zur Ausbildung der Dichtfunktion der Abdichteinrichtung (116) als Arbeitsposition ein, vorzugsweise flüssiges oder gasförmiges, Medium eingebracht wird oder ist.

12. Anordnung nach Anspruch 11, **dadurch gekennzeichnet, dass** die Abdichteinrichtung (116) durch Entnahme des Mediums aus dem Volumen von der Arbeitsposition in eine Ruheposition gebracht wird oder bringbar ist.

13. Anordnung nach Anspruch 12, **dadurch gekennzeichnet, dass** in der Ruheposition das Volumen die geringste Größe hat.

14. Anordnung nach Anspruch 12 oder 13, **dadurch gekennzeichnet, dass** die Übergänge von der Ruheposition in die Arbeitsposition und von der Arbeitsposition in die Ruheposition reversibel sind.

15. Anordnung nach einem der Ansprüche 11 bis 14, **dadurch gekennzeichnet, dass** in der Arbeitsposition das Volumen der Abdichteinrichtung (116) ein Maximum erreicht.

16. Anordnung nach einem der Ansprüche 11 bis 15, **dadurch gekennzeichnet, dass** die Abdichteinrichtung (116) zwei, insbesondere bewegliche, Profilschenkel (40, 42) aufweist, zwischen denen die Folie (44) angeordnet ist.

17. Anordnung nach einem der Ansprüche 11 bis 16, **dadurch gekennzeichnet, dass** der wenigstens eine oder beide Profilschenkel (40, 42) auf einer Trägerplatte (45) angeordnet sind.

18. Anordnung nach Anspruch 17, **dadurch gekennzeichnet, dass** die Trägerplatte (45) an der Gehäuseunterseite angeordnet und/oder in die Gehäuseunterseite integriert ist.

19. Anordnung nach einem der Ansprüche 11 bis 18, **dadurch gekennzeichnet, dass** der wenigstens eine oder beide Profilschenkel (40, 42) aufgrund von jeweils eigenen Rückstellkräften und/oder in Folge von äußeren Kräften in die Ruheposition gebracht werden.

20. Anordnung nach einem der Ansprüche 16 bis 19, **dadurch gekennzeichnet, dass** die beiden Profilschenkel (40, 42) beim Übergang in die Ruheposition nacheinander bewegt werden.

21. Anordnung nach einem der Ansprüche 16 bis 20, **dadurch gekennzeichnet, dass** die beiden Profilschenkel (40, 42) im Ruhezustand benachbart zueinander angeordnet sind.

22. Anordnung nach einem der Ansprüche 11 bis 21, **dadurch gekennzeichnet, dass** der wenigstens eine oder beide Profilschenkel (40 ,42) extrudierte Profile sind.

23. Anordnung nach einem der Ansprüche 11 bis 22, **dadurch gekennzeichnet, dass** die Folie (44) elastisch ist.

24. Anordnung nach einem der Ansprüche 16 bis 23, **dadurch gekennzeichnet, dass** die beiden Profilschenkel (40, 42) asymmetrisch zueinander angeordnet sind.

25. Anordnung nach einem der Ansprüche 11 bis 24, **dadurch gekennzeichnet, dass** der wenigstens eine oder beide Profilschenkel (40, 42) steifer als die Folie (44) ausgebildet sind.

26. Abdichteinrichtung (116) zur Anordnung an einer Maschine der Tabak verarbeitenden Industrie (VE, SE, FA), insbesondere Verteiler (VE) und/oder Zigarettenstrangmaschine (SE) und/oder Filteransetzmaschine (FA), zwischen der Gehäuseunterseite der Maschine (VE, SE, FA) und einer Bodenoberfläche (30), auf der die Maschine (VE, SE, FA) angeordnet ist, **dadurch gekennzeichnet, dass** die Abdichteinrichtung (116) wenigstens einen, insbesondere beweglichen, Profilschenkel (40, 42) und eine Folie (44) aufweist, wobei durch den wenigstens einen Profilschenkel (40, 42) und die Folie (44) ein Volumen eingeschlossen wird oder ist, in das zur Ausbildung der Dichtfunktion der Abdichteinrichtung (116) als Arbeitsposition ein, vorzugsweise flüssiges oder gasförmiges, Medium eingebracht wird oder ist.

27. Maschine (VE, SE, FA) der Tabak verarbeitenden Industrie, insbesondere Verteiler (VE) und/oder Zigarettenstrangmaschine (SE) und/oder Filteransetzmaschine (FA), mit einer Anordnung einer Abdichteinrichtung (116) nach einem der Ansprüche 11 bis 25 oder einer Abdichteinrichtung nach Anspruch 26.
